# EUROPEAN PATENT SPECIFICATION

(11) **EP 4 549 299 B1**
(45) Date of publication and mention of the grant of the patent: **04.11.2026**
(21) Application number: 23841479.1
(22) Date of filing: 25.12.2023
(51) Int. Cl.: B62J 43/16, B62J 43/28, B62K 11/04, B62K 19/24

(54) **ELECTRIC MOTORCYCLE**
ELEKTRISCHES MOTORRAD
MOTOCYCLETTE ÉLECTRIQUE

(30) Priority: 15.09.2023 CN 202311192869
(43) Date of publication of application: 07.05.2025
(73) Proprietor: Horwin Inc., Changzhou, Jiangsu 213000 (CN)
(72) Inventor: LI, Wei, Changzhou Jiangsu 213000 (CN); LIN, Zefeng, Changzhou Jiangsu 213000 (CN); ZENG, Panhua, Changzhou Jiangsu 213000 (CN)
(74) Representative: Bayramoglu et al.
(86) International application number: PCT/CN2023/141379
(87) International publication number: WO 2025/055200

(56) References cited:
- WO-A1-2013/000731
- WO-A1-2019/170306
- WO-A1-2021/250429
- CN-A- 103 824 983
- CN-A- 110 228 552
- CN-A- 115 384 673
- CN-A- 115 384 673
- CN-U- 215 706 913
- CN-U- 219 406 137
- US-A1- 2023 286 607

## Description

### TECHNICAL FIELD

The present disclosure relates to the field of motorcycles, and in particular to an electric motorcycle.

### BACKGROUND

This section is merely intended to provide background information related to the present disclosure, and does not necessarily constitute the prior art.

With better performance configurations of motorcycles and particularly electric motorcycles, there are increasingly high requirements on the bearing capacity and light weight of motorcycle bodies. In related art, a frame is usually welded by steel tubes. A battery and a motor are suspended on the steel-tube frame.

However, this frame may have the following problems. The frame manufactured with the steel tubes is heavy, such that more energy is consumed by the motorcycle in driving, and the endurance of the motorcycle is reduced. Due to welding between the steel tubes, the frame is manufactured cumbersomely. Moreover, due to suspension of the battery, the space of the battery in the motorcycle body is limited. Hence, the motorcycle can only be provided with a battery with a small size and a small capacity. This also causes poor endurance of the motorcycle.

CN219406137U disclosed an electric vehicle integrated chassis assembly. It includes a front frame, a battery pack casing, and a rear frame; the front frame and the rear frame are respectively arranged on the battery pack casing; the front and rear sides of the battery pack shell are provided with a battery pack; the battery pack shell is provided with a vehicle controller; the motor and electronic control integrated machine is set on the rear side of the battery pack casing.

WO2013/000731A1 disclosed a vehicle, comprising a front wheel, a rear wheel, an electric motor, which is provided for driving the rear and/or front wheels, and several electric storage units, which are accommodated in a storage housing. The storage housing forms a supporting component of a frame or of a body of the vehicle.

CN115384673A disclosed an electric motorcycle body, including the main frame, the rear sub-frame, the power battery, the rear shock absorber, the three-in-one motor, the left Rear chainstay, rear wheel hub, rear axle, belt, right rear chainstay, large pulley and connection point, said connection point comprises the first connection Point, second connection point, third connection point, fourth connection point, fifth connection point, sixth connection point, seventh connection point, the eighth connection point, the ninth connection point, the tenth connection point.

### SUMMARY

An objective of the present disclosure is to provide an electric motorcycle, to at least partially solve the above problems. A technical solution adopted by the present disclosure is as presented in the appended claims.

### BRIEF DESCRIPTION OF THE DRAWINGS

By reading the detailed description of the following preferred implementations, various other advantages and benefits will become apparent to those of ordinary skill in the art. The accompanying drawings are provided merely to illustrate the preferred implementations, rather than to limit the present disclosure. Throughout the accompanying drawings, the same reference numerals represent the same components. In the accompanying drawings:
FIG. 1 is a schematic structural view of an electric motorcycle according to an implementation of the present disclosure;
FIG. 2 to FIG. 6 are a schematic view of a frame assembly of an electric motorcycle according to different implementations of the present disclosure;
FIG. 7 to FIG. 10 are a schematic structural view of a battery housing of a frame assembly according to different implementations of the present disclosure; and
FIG. 11 is a sectional view of a battery housing according to an implementation of the present disclosure.

### DETAILED DESCRIPTION OF THE EMBODIMENTS

Exemplary implementations of the present disclosure will be described below in more detail with reference to the accompanying drawings. Although the accompanying drawings show exemplary implementations of the present disclosure, it should be understood that the present disclosure may be implemented in various forms and should not be limited to the implementations set forth herein. On the contrary, these implementations are provided so that the present disclosure will be more fully understandable, and will fully convey the scope of the present disclosure to those skilled in the art. Wherein the scope of the present disclosure is limited by the appended claims.

It is to be understood that the terms used in the description of the present disclosure are for the purpose of describing specific exemplary implementations only and are not the limit to the present disclosure. As used herein, the singular forms such as "a", "an" and "the" are intended to include the plural forms as well, unless the context clearly indicates otherwise. The terms "include", "comprising" and "having" are inclusive, and specify the presence of stated features, elements, and/or components, but do not preclude the presence or addition of one or more other features, elements, components, and/or combinations thereof.

Although the terms such as first and second may be used herein to describe various elements, components, regions, layers and/or sections, these elements, components, regions, layers and/or sections should not be limited by these terms. These terms are only used to distinguish one element, component, region, layer or section from another region, layer or section. Unless the context clearly indicates otherwise, terms such as "first", "second" and "third" and other numerical terms do not imply a sequence or an order in use. In addition, in the description of the present disclosure, unless otherwise clearly specified and limited, the meanings of terms "mounting" and "connection" should be understood in a broad sense. For example, the connection may be a fixed connection, a removable connection or an integrated connection, and may be a direct connection or an indirect connection via an intermediate medium. In the description of the present disclosure, unless otherwise clearly specified and limited, terms such as "fixed" indicate that a plurality of components are coupled or fixed according to technical requirements, to realize mechanical assembly without affecting correct relative positions and a correct mutual relationship, such as a mechanical connection between a bolt and a threaded hole. Those skilled in the art may understand specific meanings of the foregoing terms in the present disclosure based on a specific situation.

Spatially relative terms, such as "upper", "middle", "lower", "inner" and "close", may be used herein for ease of description to describe one element or feature's relationship to another element or feature as illustrated in the figures. The spatially relative terms are intended to encompass different orientations of the device in use or operation in addition to the orientation depicted in the figures. For example, if the device in the figures is turned over, elements described as "below" or "beneath" other elements or features would then be oriented "on" the other elements or features or "above" the other elements or features. Thus, the exemplary term "below" can encompass both an orientation of above and below. The device may be otherwise oriented (rotated 90 degrees or at other orientations) and the spatially relative descriptors used herein shall be interpreted accordingly.

In a related art, a frame of a conventional motorcycle is usually designed according to an oil tank and an engine, and is manufactured by welding steel tubes. In contrast, a power system of an electric motorcycle includes a battery and a motor. Since the battery has a larger size than an oil tank and is of an approximately cuboid shape in most cases, the frame of the fuel motorcycle cannot be directly applied to the electric motorcycle. Otherwise, the battery may have a limited size or capacity or the motorcycle may have a poor endurance.

Both the battery and the motor are crucial for the endurance, electric performance and power performance of the whole electric motorcycle. It is generally considered that the battery and the motor are power devices independent of the frame. In view of this, various frames (such as a battery frame, a battery accommodation case, a motor frame and a main frame) are designed to protect the battery and the motor. The battery and the motor are provided on the frame, so as not to apply an external load (such as a weight of a driver, a passenger or an accessory) to the battery or the motor as much as possible.

However, in order to overcome the above technical biases, it is found by an inventor that if the battery and the motor are taken as one part of the frame assembly, and are directly used as a structural member of the frame for bearing an external force, at least one of the following surprising technical effects can be achieved: First, by removing a part of frame members, the motorcycle is lightweight. Since the battery has a larger footprint in the motorcycle, an endurance of the motor can be prolonged. Second, various components are modularly combined, thereby completing assembly of the frame. This can simplify production and maintenance processes of the frame. Third, the power system and the bearing system of the electric motorcycle are at least partially integrated, such that the battery and the motor for providing a power can also be used for bearing a load. This not only simplifies an internal structure and a manufacturing cost of the electric motorcycle, but also improves function integration of the electric motorcycle.

Embodiments of the present disclosure are described below with reference to various exemplary drawings.

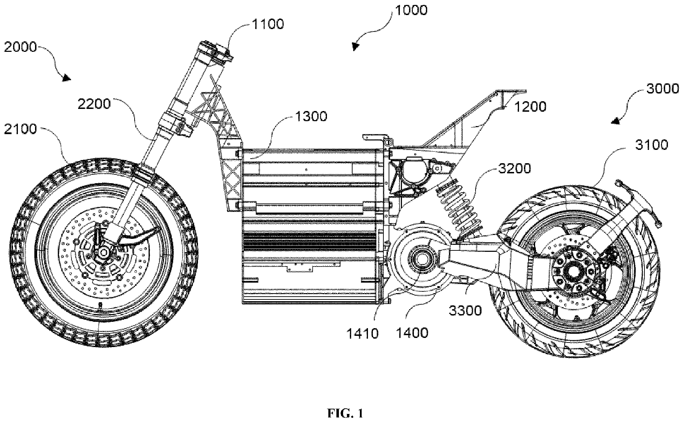

FIG. 1 illustrates an electric motorcycle according to an implementation of the present disclosure. The electric motorcycle may be an all-electric motorcycle, and may also be a hybrid motorcycle driven by an electricity and a fuel. The electric motorcycle includes frame assembly 1000, front suspension system 2000, and rear suspension system 3000.

In the implementation shown in FIG. 1, the frame assembly 1000 includes first frame 1100, second frame 1200, battery 1300, and motor 1400.

The first frame 1100 may be configured to mount the front suspension system 2000 and/or a front steering system. The front suspension system 2000 may include front wheel 2100 and front shock absorber assembly 2200 of the electric motorcycle. The second frame 1200 may be configured to mount the rear suspension system 3000. The rear suspension system 3000 may include rear wheel 3100, rear shock absorber assembly 3200, and rear chainstay 3300 of the electric motorcycle. The rear shock absorber assembly 3200 includes one end mounted on the second frame 1200, and the other end mounted on the rear chainstay 3300. The rear chainstay 3300 includes one end mounted on the rear wheel 3100, and the other end mounted on the motor 1400 through motor bearing 1410. An axis of rotation of the rear chainstay coincides with an axis of rotation of a motor output shaft, such that the rear chainstay may rotate around the motor shaft. In another implementation, the rear wheel 3100, the rear shock absorber assembly 3200, the rear chainstay 3300 and the second frame 1200 may collectively form the rear suspension system of the electric motorcycle.

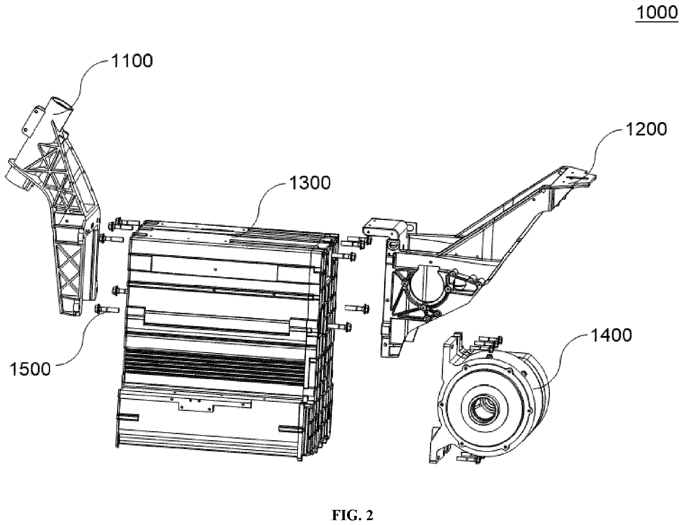

The first frame 1100 may be a front frame of the electric motorcycle and may be mounted to the battery from a first side (front side) of the battery. The second frame 1200 may be a rear frame of the electric motorcycle and may be mounted to the battery from a second side (rear side) of the battery. It is to be understood that within a scope of the present disclosure, the first side and the second side may be any two sides of the battery 1300, such as the front side and the rear side, a left side and a right side, and an upper side and a lower side of the battery, and preferably two opposite sides of the battery. As an example, the first side may be a side of the battery close to a normal heading direction of the electric motorcycle, and the second side may be a side of the battery away from the normal heading direction of the electric motorcycle. It is further to be understood that within the scope of the present disclosure, the term "mounted to from ... side" indicates a positional relationship between various components, rather than a limit to a specific connection between the various components. For example, the expression "the first frame 1100 is mounted to the battery from the front side of the battery" indicates that upon completion of mounting, the first frame is located at the front side of the battery, rather than a limit to a specific connection direction between the first frame 1100 and the battery. As a matter of fact, even though the first frame is mounted to the battery from the front side of the battery, a longitudinal or transverse connection direction can still be used according to a specific layout of connection components between the first frame and the battery, and a connecting joint surface between the first frame and the battery may also be another side (such as the left side or the right side) of the battery, as described below with reference to FIG. 2 to FIG. 6.

Herein, the motor 1400 may be mounted to the second frame 1200 and/or the battery 1300 from a battery side where the second frame 1200 is located. It is advantageous that the motor 1300 may be mounted to the second frame and the battery at the same time. For example, an upper portion and a lower portion of the motor may be respectively mounted to a lower portion of the second frame 1200 and a lower portion of the battery 1300 from the second side, thereby improving a stability of the motor. It is further advantageous that the motor may form an external permanent magnet synchronous motor. For example, the motor is mounted outside the rear wheel 3100, rather than on the rear wheel, such that the whole suspension frame has better shock absorption performance and the whole motorcycle has better power performance. It is particularly advantageous that the motor and the battery each may include an electrical interface and a fluid interface that may be connected to each other in an insertion manner. Through direct insertion, an electrical connection and a fluid connection between the motor and the battery can be realized.

It is advantageous that the first frame 1100, the second frame 1200, the battery 1300 and the motor 1400 may collectively form a bearing structure of the electric motorcycle to bear a weight of a body, a driver, a passenger and/or other accessories. In this case, the battery and the motor that provide the power can also be used to bear an external force. Therefore, the power system and the bearing system of the electric motorcycle can be at least partially integrated together. This not only can simplify an internal structure and a manufacturing cost of the electric motorcycle, but also further improves function integration of the electric motorcycle. It is further advantageous that the frame structure (or the bearing structure) of the electric motorcycle may exclude other frame members except the first frame and the second frame. In other words, the frame assembly of the electric motorcycle may only include the first frame 1100, the second frame 1200, the battery 1300 and the motor 1400, rather than a battery frame, a motor frame or any frame member connected between the first frame 1100 and the second frame 1200. Within the scope of the present disclosure, the term "frame member" refers to a connecting or bearing frame. The frame member may for example be a frame formed by connecting a sectional material or welding a tubular member, and thus does not have other functions (such as an electric function or a power function). In the present disclosure, it is advantageous that although the battery and the motor are not a real frame member, they may have a similar bearing function as the frame member, and thus can be viewed as a constituent part of the frame assembly.

In a preferred implementation, the first frame 1100, the second frame 1200 and battery housing 1310 may for example be made of an alloy material, preferably a light alloy material such as an aluminum alloy, a copper alloy or an aluminum copper alloy. It is more advantageous that the first frame 1100, the second frame 1200 and the battery housing 1310 may be integrally formed by stamping.

FIG. 2 to FIG. 6 exemplarily illustrate a schematic view of a frame assembly of an electric motorcycle according to different implementations of the present disclosure.

In a preferred implementation, each component in the frame assembly may be detachably connected and fixed through a threaded connection such as a screwed connection or a bolted connection. As shown in FIG. 2, a plurality of threaded holes may be formed in the first frame 1100. A plurality of threaded holes may also be formed in the first side of the battery 1300 and corresponding to the threaded holes in the first frame. A plurality of bolts 1500 may sequentially pass through the threaded holes in the first frame 1100 and the threaded holes in the battery 1300, and are fixed therein, such that the first frame 1100 is fixedly connected to the battery 1300. When the first frame 1100, the front suspension system 2000 or the front wheel assembly of the electric motorcycle is to be replaced, these bolts can be respectively detached from the threaded holes. Thus, the first frame (or the connected front suspension system 2000 or the connected front wheel assembly) can be detached from the battery.

Likewise, a plurality of threaded holes may be formed in the second frame 1200. A plurality of threaded holes may also be formed in the second side of the battery 1300 and corresponding to the threaded holes in the second frame. A plurality of bolts 1500 may sequentially pass through the threaded holes in the second frame 1200 and the threaded holes in the second side of the battery 1300, and are fixed therein, such that the second frame 1200 is fixedly connected to the battery 1300. When the second frame 1200 or the rear suspension system 3000 of the electric motorcycle is to be replaced, these bolts can be respectively detached from the threaded holes. Thus, the second frame (or the connected rear suspension system 3000) can be detached from the battery.

In addition, the upper portion and the lower portion of the motor 1400 each may be provided with a plurality of threaded holes. Accordingly, a plurality of threaded holes corresponding to the threaded holes in the upper portion of the motor may be formed in the second frame 1200. A plurality of threaded holes corresponding to the threaded holes in the lower portion of the motor may be formed in the second side of the battery 1300. Through cooperation between the bolts 1500 and the threaded holes, the upper portion of the motor 1400 can be fixed to the second frame 1200, and the lower portion of the motor can be fixed to the battery 1300. It is advantageous that in this manner, the motor can be fixed on the second frame and at the second side of the battery. Therefore, the motor is mounted firmly and stably, and is not loosened easily due to vibration or an inartificial external factor. In addition, the stable motor is also beneficial for an overall stability of the connected rear suspension system, such that the electric motorcycle achieves better power performance.

Upon completion of mounting, the first frame is provided at the first side of the battery, the second frame is provided at the second side of the battery, and the motor is provided at the second side of the battery and located under the second frame. It is to be noted that there are no limits made on a number of threaded connections and a direction between these components (namely the first frame, the second frame, the battery and the motor) of the frame assembly. For example, a connection (such as a threaded connection) between any two components of the frame assembly may be a transverse connection or a longitudinal connection, and may also be a combination of the transverse connection and the longitudinal connection. Within the scope of the present disclosure, the term "transverse" may refer to a direction parallel to the ground and perpendicular to a central axis of the electric motorcycle, and the term "longitudinal" may refer to a direction parallel to the ground and parallel to the central axis of the electric motorcycle (or the heading direction of the electric motorcycle). It is advantageous that various components in the frame assembly may mainly transmit a force along the longitudinal direction.

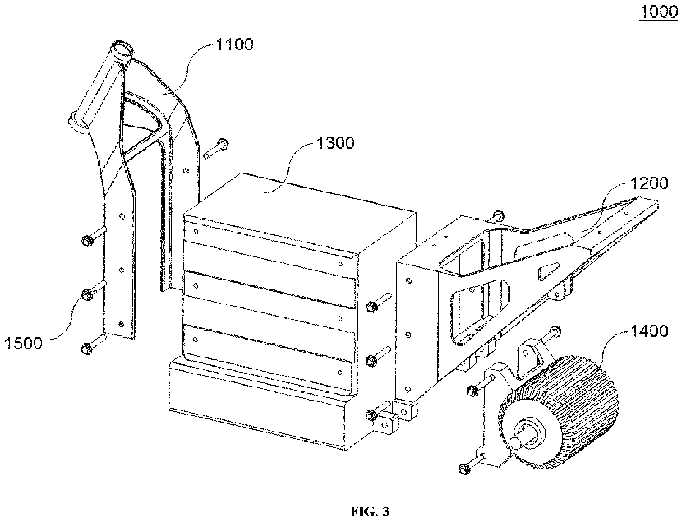

In the implementation shown in FIG. 2, various components (namely the first frame 1100 and the battery 1300, the second frame 1200 and the battery 1300, the motor 1400 and the battery 1300, as well as the motor 1400 and the second frame 1200) in the frame assembly are fixed to each other through the longitudinal connection. In the implementation shown in FIG. 3, various components (namely the first frame 1100 and the battery 1300, the second frame 1200 and the battery 1300, the motor 1400 and the battery 1300, as well as the motor 1400 and the second frame 1200) in the frame assembly are fixed to each other through the transverse connection. In other words, all bolts for connecting the various components in the frame assembly can be inserted into and fixed in corresponding threaded holes along a uniform direction (which is the longitudinal direction in FIG. 2 and the transverse direction in FIG. 3). This can simplify assembly and detachment of the frame assembly, such that the corresponding component of the frame assembly can be quickly detached or replaced if necessary. Moreover, sine the direction of the threaded connection is the same as the force transmission direction of the frame assembly, the bearing capacity and the reliability of the frame assembly can be maximized.

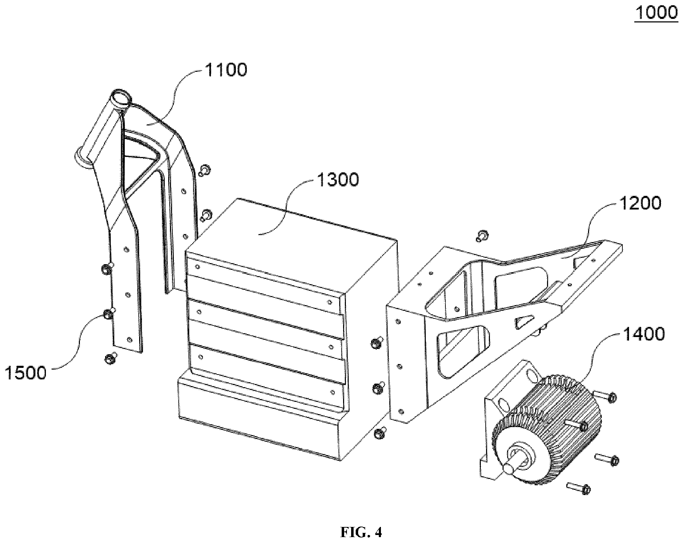

In the implementation shown in FIG. 4, the first frame 1100 and the battery 1300, as well as the second frame 1200 and the battery 1300, are fixed to each other through the transverse connection. The motor 1400 and the battery 1300, as well as the motor 1400 and the second frame 1200, are fixed to each other through the longitudinal connection. Herein, although a joint surface between the battery and the first frame and a joint surface between the battery and the second frame are respectively located at the left side and the right side of the battery due to the transversely extending threaded connection, the first frame and the second frame are still respectively located at the front side and the rear side of the battery relative to the battery. Thus, it is to be understood that the first frame and the second frame are still respectively mounted to the battery from the front side and the rear side of the battery. In the implementation, it is advantageous that a direction of the threaded connection of the motor is different from a direction of the threaded connection of each of the first frame and the second frame, and is preferably perpendicular to the direction of the threaded connection of each of the first frame and the second frame. Thus, connection locking forces of the various components in the frame assembly can be staggered, and the frame assembly can be mounted more firmly.

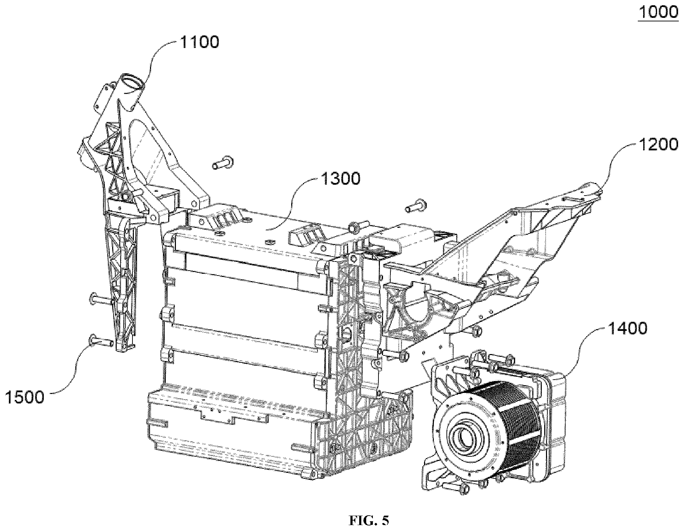

In the implementation shown in FIG. 5, the first frame 1100 and the battery 1300, as well as the second frame 1200 and the battery 1300, are fixed to each other through the transverse connection and the longitudinal connection. The motor 1400 and the battery 1300, as well as the motor 1400 and the second frame 1200, are fixed to each other through the longitudinal connection. It is advantageous that a part or all of the components (such as the first frame and the second frame) in the frame assembly can be fixed through the transverse connection and the longitudinal connection to ensure a connection reliability of these components. It is advantageous that the first frame and the second frame can be connected to the front side, the rear side, the left side and the right side of the battery, and thus a force bearing point of each of the first frame and the second frame for the battery can be dispersed to reduce load integration of the battery.

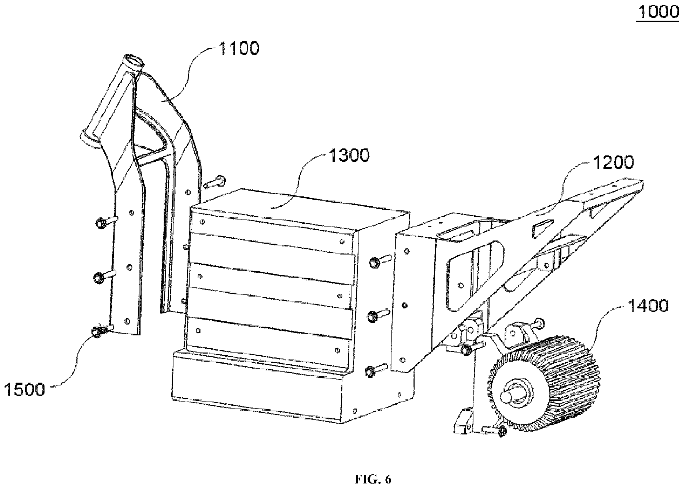

In the implementation shown in FIG. 6, the first frame 1100 and the battery 1300, the second frame 1200 and the battery 1300, as well as the motor 1400 and the second frame 1200, are fixed to each other through the transverse connection. The motor 1400 and the battery 1300 are fixed to each other through the longitudinal connection. It is advantageous that the motor 1400 is fixed on the second frame and on the battery. This can improve a mounting stability of the battery, and can prevent the motor from getting loose due to vibration in operation. It is advantageous that a direction of connecting the motor to the second frame (such as the transverse direction) is different from a direction of connecting the motor to the battery (such as the longitudinal connection). This can make mounting forces of the motor locked to each other, and can improve the mounting reliability of the motor.

It is to be understood that the connection and particularly the connection direction between the various components in the frame assembly are not limited to the above illustrated implementations, but can be adjusted or combined according to a configuration requirement in the body or other structural requirements of the body.

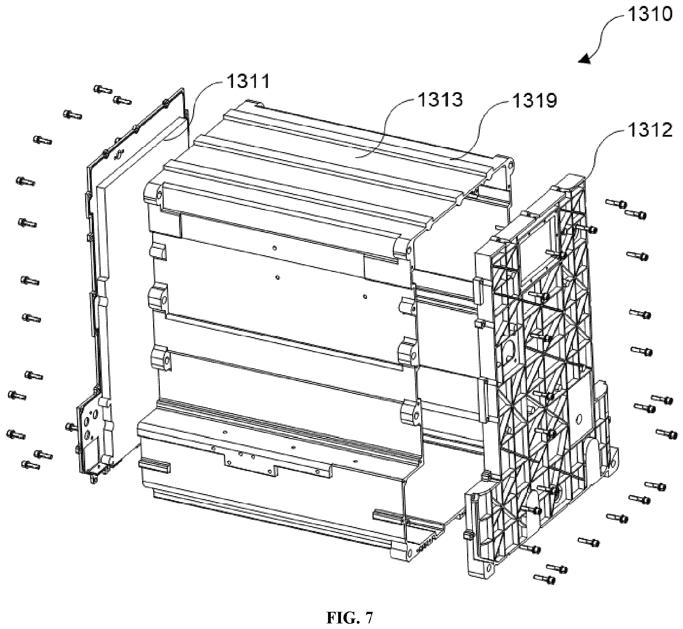

FIG. 7 to FIG. 10 are a schematic structural view of a battery housing according to different implementations of the present disclosure. In an implementation of the present disclosure, the frame assembly may only include the first frame, the second frame, the battery and the motor, without other frame bearing members for bearing various loads of the vehicle in movement. Hence, it is important that the battery and the motor can have a certain bearing capacity, and can be taken as one part of the frame assembly to achieve an additional bearing function. In addition, compared with the motor provided under the second frame, the battery as an intermediate component of the frame assembly requires a higher bearing capacity.

In the implementation shown in FIG. 7, the battery 1300 may further include battery housing 1310 and at least one battery module in the battery housing. In order to improve the bearing capacity of the battery, a plurality of reinforcing ribs 1319 may be provided on the battery housing 1310. It is advantageous that these reinforcing ribs can be provided at each side of the battery, and can extend along a force transmitting direction (longitudinal direction) of the battery, such that the battery can achieve the higher bearing strength.

In addition, the battery housing 1310 may be a segment-wise structure, and may be combined by a plurality of housing components (such as two, three or more housing components). It is advantageous that the segment-wise structure can reduce a forming difficulty of the battery housing, and can lower a manufacturing cost of the battery. As shown in FIG. 7, the battery housing 1310 may include first housing cover 1311, second housing cover 1312, and main housing 1313. The main housing 1313 may be an annular structure with two open ends. The main housing may be integrally formed, for example, by stamping. The two open ends of the housing may be respectively provided with a plurality of threaded holes for mounting the first housing cover 1311 and the second housing cover 1312. The first housing cover 1311 and the second housing cover 1312 each form an end cover member corresponding to a cross section of the main housing, and are provided with threaded holes corresponding to the threaded holes of the main housing. In mounting, bolts may sequentially pass through the threaded holes in the first housing cover, the second housing cover and the main housing, and are fixed therein. It is advantageous that a threaded connection may be provided at an edge of the end of the main housing (around the cross section of the main housing). This not only improves airtightness of the whole battery housing, but also can make the whole battery more rigid.

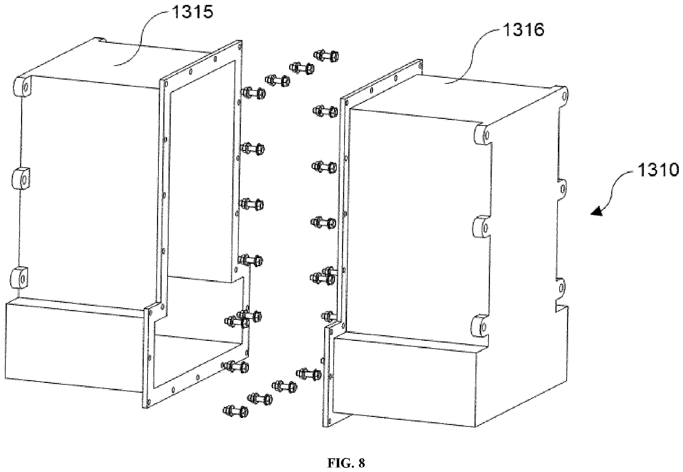

In another implementation shown in FIG. 8, first housing half 1315 and second housing half 1316 may respectively form a front half and a rear half of the battery housing 1310. The front half and the rear half may be two portions defined according to a heading direction and a reversing direction of the electric motorcycle. Likewise, the first housing half 1315 and the second housing half 1316 each are provided with a flange extending along an edge of a cross section of the battery. Corresponding threaded holes are formed in the flange. The first housing half 1315 and the second housing half 1316 can be fixed through a threaded connection (such as a bolted connection) of the flange, thereby forming the sealed battery housing 1310 and making the whole battery more rigid.

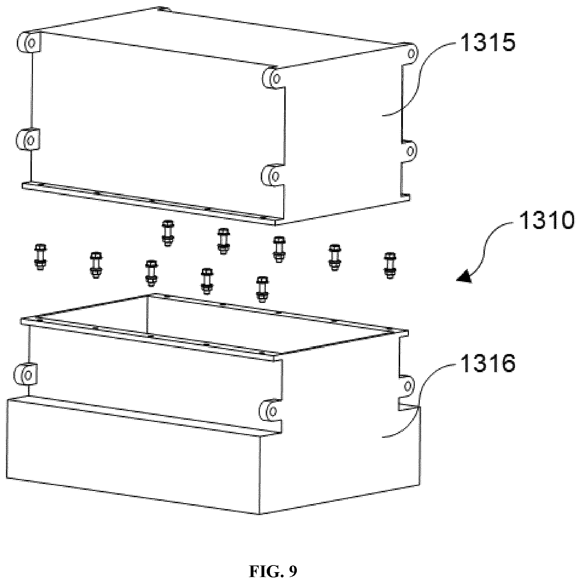

In another implementation shown in FIG. 9, the battery housing 1310 may be combined by the first housing half 1315 and the second housing half 1316. The first housing half 1315 and the second housing half 1316 may respectively form the front half and the rear half of the battery housing 1310. A flange strip extending along the longitudinal direction of the battery is provided on a joint surface of each of the first housing half 1315 and the second housing half 1316. Corresponding threaded holes are formed in the flange strip. The first housing half 1315 and the second housing half 1316 can be fixed to each other through a threaded connection (such as a bolted connection) of the flange strip, thereby forming the sealed battery housing 1310. It is advantageous that the longitudinal extending direction of the flange strip is the same as a main force transmitting direction of the battery housing. This can further improve a rigidity and a bearing strength of the battery housing.

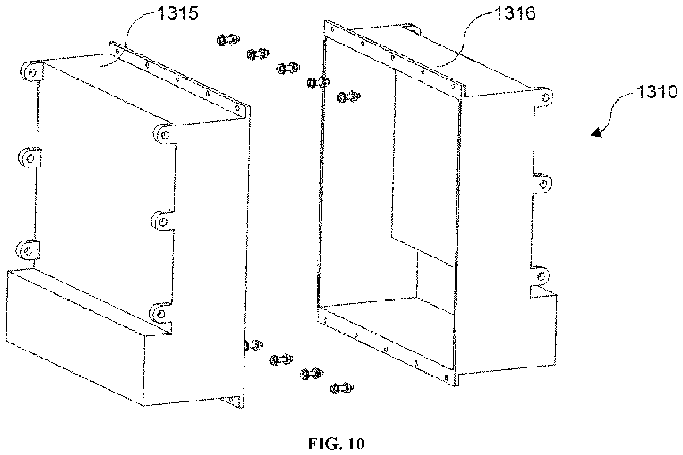

In another implementation shown in FIG. 10, the first housing half 1315 and the second housing half 1316 may respectively form a left half and a right half of the battery housing 1310. The left half and the right half may be two portions defined according to the normal heading direction of the electric motorcycle. Likewise, a flange extending along the longitudinal direction of the battery is provided on each of the two housing halves. Corresponding threaded holes are formed in the flange. The first housing half 1315 and the second housing half 1316 can be fixed to each other through a threaded connection (such as a bolted connection) of the flange, thereby forming the sealed battery housing 1310 and improving the rigidity and the bearing strength of the battery housing. In the implementation shown in FIG. 9 and FIG. 10, it is advantageous that a connection direction (an up-down direction and a left-right direction) of the battery housing is different from a direction (front-rear direction) of mounting each of the first frame and the second frame to the battery. Thus, when the first frame and the second frame are respectively mounted to the battery from the front side and the rear side of the battery, the two housing halves can be locked more firmly to further improve the mounting reliability of the battery housing.

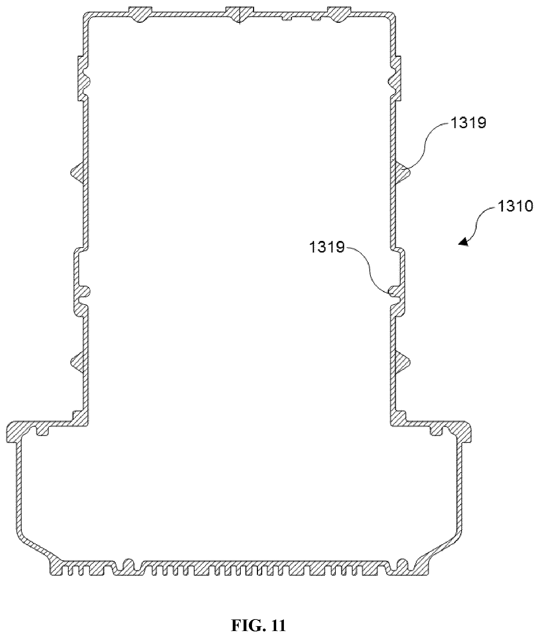

FIG. 11 illustrates an exemplary cross section of the battery housing 1310. The cross section is obtained by cutting the battery housing along a vertical direction. In the example, the section may be of a convex shape. In other examples, the section may be of a rectangular shape or an approximately rectangular shape. It is advantageous that a length direction of the section is the same as a direction of gravity (a direction of an external force applied to the battery). This can improve bending performance of the battery housing in a force direction.

In addition, it is advantageous that as shown by a triangular, square or semicircular bump extending out from the convex section in the figure, the reinforcing ribs 1319 can be provided inside and outside the battery housing. The reinforcing ribs preferably extend along the longitudinal direction of the battery, thereby further improving the strength of the battery housing. It is particularly advantageous that the reinforcing ribs 1319 inside the battery housing can be connected to a connecting beam for fixing the battery module, such that the reinforcing ribs 1319 inside the battery housing can further be additionally used to mount the battery module. Specifically, the connecting beam can be mounted between the reinforcing ribs that are located on opposite surfaces and have a same height, so as to fix the battery module and bear a weight of the battery module. Each battery module can be sequentially stacked in the battery housing. Upon completion of mounting, the battery housing can be integrated with the stacked battery module. This can further increase the overall rigidity of the battery, such that the battery can be taken as the bearing structural member of the frame assembly.

The present disclosure realizes the frame assembly for an electric motorcycle and the electric motorcycle through the following implementations. The power system and the bearing system of the electric motorcycle are at least partially integrated together. The frame structure of the electric motorcycle may exclude other frames except the front frame and the rear frame. The motor and the battery are used as the bearing member of the frame assembly. This at least can simplify an internal structure and a manufacturing cost of the electric motorcycle, and improve function integration of the electric motorcycle.

The above merely describes preferred specific implementations of the present disclosure, but the protection scope of the present disclosure is not limited thereto. Any person skilled in the art can easily conceive modifications or replacements within the technical scope of the present disclosure, and these modifications or replacements shall fall within the protection scope of the present disclosure. Therefore, the protection scope of the present disclosure shall be subject to the protection scope of the claims.

## Claims

1. An electric motorcycle, comprising a frame assembly (1000);
wherein the frame assembly comprises a first frame (1100), a second frame (1200), a battery (1300), and a motor (1400),
wherein the first frame (1100) and the second frame (1200) are respectively mounted to the battery (1300) from a first side and a second side of the battery (1300); and
the first side and the second side are opposite sides of the battery (1300); wherein the first frame (1100) is configured to mount a front suspension system (2000) of the electric motorcycle, and the front suspension system (2000) comprises a front shock absorber assembly (2200) and/or a front wheel (2100); and
the second frame (1200) is configured to mount a rear suspension system (3000) of the electric motorcycle, and the rear suspension system (3000) comprises a rear shock absorber assembly (3200), a rear chainstay (3300) and/or a rear wheel (3100);
**characterized in that** the motor (1400) is mounted to both the battery (1300) and the second frame (1200) from the second side;
wherein the motor (1400) is connected to the rear chainstay (3300) of the electric motorcycle through a motor bearing (1410) of the motor (1400), and an axis of rotation of a motor shaft of the motor (1400) coincides with an axis of rotation of the rear chainstay (3300), such that the rear chainstay (3300) is configured to rotate around the motor shaft.

2. The electric motorcycle according to claim 1, wherein
the first frame (1100), the second frame (1200), the battery (1300) and the motor (1400) collectively form a bearing structure of the electric motorcycle.

3. The electric motorcycle according to claim 1, wherein
the motor (1400) is mounted out of a hub of the electric motorcycle.

4. The electric motorcycle according to claim 1, wherein
the battery (1300) comprises at least one battery module and a battery housing (1310), and the at least one battery module is located in the battery housing (1310).

5. The electric motorcycle according to claim 1, wherein
the first side is a side of the battery (1300) adjacent to a heading direction of the electric motorcycle, and the second side is a side of the battery (1300) away from the heading direction of the electric motorcycle.

6. The electric motorcycle according claim 4, wherein
the first frame (1100), the second frame (1200) and/or the battery housing (1310) are integrally formed.

7. The electric motorcycle according to any one of claims 1 to 5, wherein
an electrical interface and/or a fluid interface of the motor (1400) is connected to an electrical interface and/or a fluid interface of the battery (1300) in an insertion manner.

8. The electric motorcycle according to any one of claims 1 to 5, wherein
the first frame (1100) and the battery (1300), the second frame (1200) and the battery (1300), the motor (1400) and the battery (1300), and/or the motor (1400) and the second frame (1200) are fixed to each other by a detachable connection.

9. The electric motorcycle according to claim 8, wherein
the detachable connection comprises a longitudinal connection and/or a transverse connection.

10. The electric motorcycle according to claim 4, wherein
the battery housing (1310) has a rectangular or convex vertical section.

11. The electric motorcycle according to claim 4, wherein
a reinforcing rib (1319) extending along a longitudinal direction of the battery (1300) is provided outside and/or inside the battery housing (1310).

12. The electric motorcycle according to claim 11, wherein
the reinforcing rib (1319) inside the battery housing (1310) is configured to connect the at least one battery module and/or mount a connecting beam.

13. The electric motorcycle according to claim 4, wherein
the battery housing (1310) comprises a plurality of housing components.

14. The electric motorcycle according to claim 13, wherein
the battery housing (1310) comprises a first housing cover (1311), a second housing cover (1312), and a main housing (1313);
the first housing cover (1311) and the second housing cover (1312) are respectively connected to two sides of the main housing (1313); and
the main housing (1313) is integrally formed.

15. The electric motorcycle according to claim 13, wherein
the battery housing (1310) comprises a first housing half (1315) and a second housing half (1316); and
the first housing half (1315) and the second housing half (1316) are fixed to each other through a threaded connection.

16. The electric motorcycle according to claim 15, wherein
the first housing half (1315) and the second housing half (1316) each comprise a flange for the threaded connection, and the flange extends along a longitudinal direction of the battery (1300).

17. The electric motorcycle according to claim 15, wherein
the first housing half (1315) and the second housing half (1316) respectively form an upper housing half and a lower housing half, a left housing half and a right housing half, or a front housing half and a rear housing half of the battery housing (1310).

18. The electric motorcycle according to any one of claims 1 to 17, wherein the electric motorcycle is an all-electric motorcycle or a gasoline-electric hybrid motorcycle.

## Patentansprüche

1. Elektromotorrad, umfassend eine Rahmenbaugruppe (1000);
wobei die Rahmenbaugruppe einen ersten Rahmen (1100), einen zweiten Rahmen (1200), eine Batterie (1300) und einen Motor (1400) umfasst,
wobei der erste Rahmen (1100) und der zweite Rahmen (1200) jeweils von einer ersten Seite und einer zweiten Seite der Batterie (1300) an der Batterie (1300) gelagert sind; und
die erste Seite und die zweite Seite gegenüberliegende Seiten der Batterie (1300) sind;
wobei der erste Rahmen (1100) dazu konfiguriert ist, ein Vorderradaufhängungssystem (2000) des Elektromotorrads zu lagern, und das Vorderradaufhängungssystem (2000) eine vordere Stoßdämpferbaugruppe (2200) und/oder ein Vorderrad (2100) umfasst; und
der zweite Rahmen (1200) dazu konfiguriert ist, ein Hinterradaufhängungssystem (3 000) des Elektromotorrads zu lagern, und das Hinterradaufhängungssystem (3000) eine hintere Stoßdämpferbaugruppe (3200), eine hintere Kettenstrebe (3300) und/oder ein Hinterrad (3100) umfasst;
**dadurch gekennzeichnet, dass** der Motor (1400) von der zweiten Seite sowohl an der Batterie (1300) als auch an dem zweiten Rahmen (1200) gelagert ist;
wobei der Motor (1400) über ein Motorlager (1410) des Motors (1400) mit der hinteren Kettenstrebe (3300) des Elektromotorrads verbunden ist und eine Drehachse einer Motorwelle des Motors (1400) mit einer Drehachse der hinteren Kettenstrebe (3300) zusammenfällt, sodass die hintere Kettenstrebe (3300) dazu konfiguriert ist, sich um die Motorwelle zu drehen.

2. Elektromotorrad nach Anspruch 1, wobei
der erste Rahmen (1100), der zweite Rahmen (1200), die Batterie (1300) und der Motor (1400) gemeinsam eine Tragstruktur des Elektromotorrads bilden.

3. Elektromotorrad nach Anspruch 1, wobei
der Motor (1400) außerhalb einer Nabe des Elektromotorrads gelagert ist.

4. Elektromotorrad nach Anspruch 1, wobei
die Batterie (1300) mindestens ein Batteriemodul und ein Batteriegehäuse (1310) umfasst und das mindestens eine Batteriemodul in dem Batteriegehäuse (1310) angeordnet ist.

5. Elektromotorrad nach Anspruch 1, wobei
die erste Seite eine Seite der Batterie (1300) ist, die einer Fahrtrichtung des Elektromotorrads benachbart ist, und die zweite Seite eine Seite der Batterie (1300) ist, die von der Fahrtrichtung des Elektromotorrads abgewandt ist.

6. Elektromotorrad nach Anspruch 4, wobei
der erste Rahmen (1100), der zweite Rahmen (1200) und/oder das Batteriegehäuse (1310) einstückig ausgebildet sind.

7. Elektromotorrad nach einem der Ansprüche 1 bis 5, wobei
eine elektrische Schnittstelle und/oder eine Fluidschnittstelle des Motors (1400) mit einer elektrischen Schnittstelle und/oder einer Fluidschnittstelle der Batterie (1300) durch Einstecken verbunden ist.

8. Elektromotorrad nach einem der Ansprüche 1 bis 5, wobei
der erste Rahmen (1100) und die Batterie (1300), der zweite Rahmen (1200) und die Batterie (1300), der Motor (1400) und die Batterie (1300) und/oder der Motor (1400) und der zweite Rahmen (1200) durch eine lösbare Verbindung aneinander befestigt sind.

9. Elektromotorrad nach Anspruch 8, wobei
die lösbare Verbindung eine Längsverbindung und/oder eine Querverbindung umfasst.

10. Elektromotorrad nach Anspruch 4, wobei
das Batteriegehäuse (1310) einen rechteckigen oder konvexen Vertikalschnitt aufweist.

11. Elektromotorrad nach Anspruch 4, wobei
eine sich entlang einer Längsrichtung der Batterie (1300) erstreckende Verstärkungsrippe (1319) außerhalb und/oder innerhalb des Batteriegehäuses (1310) vorgesehen ist.

12. Elektromotorrad nach Anspruch 11, wobei
die Verstärkungsrippe (1319) innerhalb des Batteriegehäuses (1310) dazu konfiguriert ist, das mindestens eine Batteriemodul zu verbinden und/oder einen Verbindungsträger zu lagern.

13. Elektromotorrad nach Anspruch 4, wobei
das Batteriegehäuse (1310) mehrere Gehäusekomponenten umfasst.

14. Elektromotorrad nach Anspruch 13, wobei
das Batteriegehäuse (1310) eine erste Gehäuseabdeckung (1311), eine zweite Gehäuseabdeckung (1312) und ein Hauptgehäuse (1313) umfasst;
die erste Gehäuseabdeckung (1311) und die zweite Gehäuseabdeckung (1312) mit jeweils einer von zwei Seiten des Hauptgehäuses (1313) verbunden sind; und
das Hauptgehäuse (1313) einstückig ausgebildet ist.

15. Elektromotorrad nach Anspruch 13, wobei
das Batteriegehäuse (1310) eine erste Gehäusehälfte (1315) und eine zweite Gehäusehälfte (1316) umfasst; und
die erste Gehäusehälfte (1315) und die zweite Gehäusehälfte (1316) durch eine Schraubverbindung aneinander befestigt sind.

16. Elektromotorrad nach Anspruch 15, wobei
die erste Gehäusehälfte (1315) und die zweite Gehäusehälfte (1316) jeweils einen Flansch für die Schraubverbindung umfassen und sich der Flansch entlang einer Längsrichtung der Batterie (1300) erstreckt.

17. Elektromotorrad nach Anspruch 15, wobei
die erste Gehäusehälfte (1315) und die zweite Gehäusehälfte (1316) jeweils eine obere Gehäusehälfte und eine untere Gehäusehälfte, eine linke Gehäusehälfte und eine rechte Gehäusehälfte oder eine vordere Gehäusehälfte und eine hintere Gehäusehälfte des Batteriegehäuses (1310) bilden.

18. Elektromotorrad nach einem der Ansprüche 1 bis 17, wobei das Elektromotorrad ein vollelektrisches Motorrad oder ein Benzin-Elektro-Hybridmotorrad ist.

## Revendications

1. Motocyclette électrique, comprenant un ensemble cadre (1000) ;
dans laquelle l'ensemble cadre comprend un premier cadre (1100), un deuxième cadre (1200), une batterie (1300) et un moteur (1400),
dans laquelle le premier cadre (1100) et le deuxième cadre (1200) sont montés respectivement sur la batterie (1300) à partir d'un premier côté et d'un deuxième côté de la batterie (1300) ; et
le premier côté et le deuxième côté sont des côtés opposés de la batterie (1300) ;
dans laquelle le premier cadre (1100) est configuré pour monter un système de suspension avant (2000) de la motocyclette électrique, et le système de suspension avant (2000) comprend un ensemble amortisseur avant (2200) et/ou une roue avant (2100) ; et
le deuxième cadre (1200) est configuré pour monter un système de suspension arrière (3000) de la motocyclette électrique, et le système de suspension arrière (3000) comprend un ensemble amortisseur arrière (3200), une fourche arrière (3300) et/ou une roue arrière (3100) ;
**caractérisée en ce que** le moteur (1400) est monté sur la batterie (1300) et sur le deuxième cadre (1200) à partir du deuxième côté ;
dans laquelle le moteur (1400) est relié à la fourche arrière (3300) de la motocyclette électrique à travers un palier moteur (1410) du moteur (1400), et un axe de rotation d'un arbre moteur du moteur (1400) coïncide avec un axe de rotation de la fourche arrière (3300), de telle sorte que la fourche arrière (3300) soit configurée pour tourner autour de l'arbre moteur.

2. Motocyclette électrique selon la revendication 1, dans laquelle
le premier cadre (1100), le deuxième cadre (1200), la batterie (1300) et le moteur (1400) forment ensemble une structure porteuse de la motocyclette électrique.

3. Motocyclette électrique selon la revendication 1, dans laquelle
le moteur (1400) est monté à l'extérieur d'un moyeu de la motocyclette électrique.

4. Motocyclette électrique selon la revendication 1, dans laquelle
la batterie (1300) comprend au moins un module de batterie et un boîtier de batterie (1310), et l'au moins un module de batterie est situé dans le boîtier de batterie (1310).

5. Motocyclette électrique selon la revendication 1, dans laquelle
le premier côté est un côté de la batterie (1300) adjacent à une direction d'avance de la motocyclette électrique, et le deuxième côté est un côté de la batterie (1300) éloigné de la direction d'avance de la motocyclette électrique.

6. Motocyclette électrique selon la revendication 4, dans laquelle
le premier cadre (1100), le deuxième cadre (1200) et/ou le boîtier de batterie (1310) sont formés d'un seul tenant.

7. Motocyclette électrique selon l'une quelconque des revendications 1 à 5, dans laquelle
une interface électrique et/ou une interface fluidique du moteur (1400) est reliée à une interface électrique et/ou à une interface fluidique de la batterie (1300) par insertion.

8. Motocyclette électrique selon l'une quelconque des revendications 1 à 5, dans laquelle
le premier cadre (1100) et la batterie (1300), le deuxième cadre (1200) et la batterie (1300), le moteur (1400) et la batterie (1300), et/ou le moteur (1400) et le deuxième cadre (1200) sont fixés les uns aux autres par une liaison détachable.

9. Motocyclette électrique selon la revendication 8, dans laquelle
la liaison détachable comprend une liaison longitudinale et/ou une liaison transversale.

10. Motocyclette électrique selon la revendication 4, dans laquelle
le boîtier de batterie (1310) présente une section verticale rectangulaire ou convexe.

11. Motocyclette électrique selon la revendication 4, dans laquelle
une nervure de renforcement (1319) s'étendant le long d'une direction longitudinale de la batterie (1300) est ménagée à l'extérieur et/ou à l'intérieur du boîtier de batterie (1310).

12. Motocyclette électrique selon la revendication 11, dans laquelle
la nervure de renforcement (1319) à l'intérieur du boîtier de batterie (1310) est configurée pour relier l'au moins un module de batterie et/ou monter une poutre de liaison.

13. Motocyclette électrique selon la revendication 4, dans laquelle
le boîtier de batterie (1310) comprend une pluralité de composants de boîtier.

14. Motocyclette électrique selon la revendication 13, dans laquelle
le boîtier de batterie (1310) comprend un premier couvercle de boîtier (1311), un deuxième couvercle de boîtier (1312) et un boîtier principal (1313) ;
le premier couvercle de boîtier (1311) et le deuxième couvercle de boîtier (1312) sont respectivement reliés à deux côtés du boîtier principal (1313) ; et
le boîtier principal (1313) est formé d'un seul tenant.

15. Motocyclette électrique selon la revendication 13, dans laquelle
le boîtier de batterie (1310) comprend une première moitié de boîtier (1315) et une deuxième moitié de boîtier (1316) ; et
la première moitié de boîtier (1315) et la deuxième moitié de boîtier (1316) sont fixées l'une à l'autre à travers une liaison filetée.

16. Motocyclette électrique selon la revendication 15, dans laquelle
chacune de la première moitié de boîtier (1315) et de la deuxième moitié de boîtier (1316) comprend une bride pour la liaison filetée, et la bride s'étend le long d'une direction longitudinale de la batterie (1300).

17. Motocyclette électrique selon la revendication 15, dans laquelle
la première moitié de boîtier (1315) et la deuxième moitié de boîtier (1316) forment respectivement une moitié de boîtier supérieure et une moitié de boîtier inférieure, une moitié de boîtier gauche et une moitié de boîtier droite, ou une moitié de boîtier avant et une moitié de boîtier arrière du boîtier de batterie (1310).

18. Motocyclette électrique selon l'une quelconque des revendications 1 à 17, dans laquelle la motocyclette électrique est une motocyclette tout-électrique ou une motocyclette hybride essence-électrique.
